# EUROPEAN PATENT APPLICATION

(11) **EP 1 215 576 A2**
(43) Date of publication of application: **19.06.2002**
(21) Application number: 01128822.2
(22) Date of filing: 04.12.2001
(51) Int. Cl.: G06F 11/14

(54) **Automatic application restart in an embedded environment**

(30) Priority: 15.12.2000 EP 00127577
(71) Applicant: International Business Machines Corporation, Armonk, NY 10504 (US)
(72) Inventor: Böhm ,Janko, 71139 Ehningen (DE); Elfering, Herwig Gustav, 67850 Offendorf (FR); Hess, Thomas, 75378 Bad Liebenzell (DE); Metz, Daniel, 76461 Muggensturm (DE)
(74) Representative: Duscher, Reinhard, Dr.

(57) **Abstract**

The present invention relates to a method and system for operating an input/output circuit (26) for driving peripheral devices controlled by an embedded system. For increasing the overall system availability the invention proposes to add some limited repeatedly performed status storing functionality preferably into a register storage (40) of the I/O devices. This can be easily exploited, i.e., read out from external of the input/output devices via the controller of the embedded system.

## Description

### 1. BACKGROUND OF THE INVENTION

### 1.1 FIELD OF THE INVENTION

The present invention relates to improvements of system availability of networked computer systems. In particular, it relates to method and system for operating an input/output circuit for driving peripheral devices within an embedded system.

### 1.2 DESCRIPTION AND DISADVANTAGES OF PRIOR ART

The present invention is generally applicable in computer networks comprising a plurality of computers. Particular additional advantages can be taken of it when said plurality of computers has some inner structure of 'competence distribution' exist, in particular a structure in which a first type of server computers and a second type of more or less dedicated control computer, in particular embedded controllers, exist which have only a reduced technical equipment, as e.g., no hard disk, or display unit, or keyboard, etc..

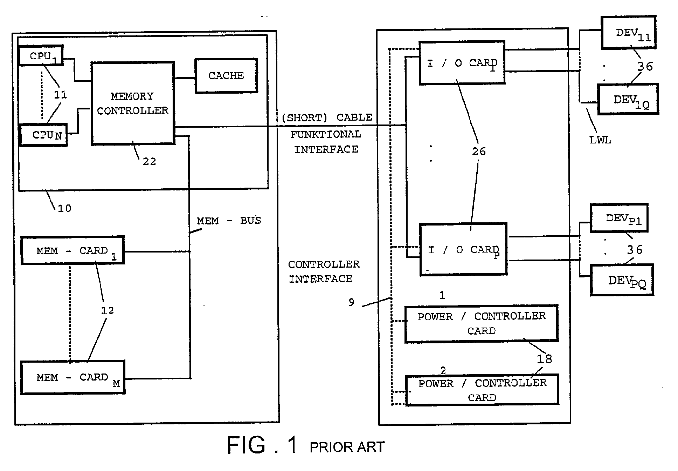

Although the present invention has a very broad scope implied by its inherent technical abstractness it will be discussed in here with reference to a larger enterprise computer network which is schematically depicted in Fig. 1.

Such a multi-server / multi-user networked environment comprises a huge number of peripheral devices 36, e.g. terminals, printers, storage devices, sensors, actuators and the like, which are connected with and controlled by a server cluster 10 having a plurality of CPUs 11, a memory controller 22 cooperating with a cache device 14 and a plurality of memory cards 12 via a respective system bus or a adapted switching device.

To supervise the communication between said server cluster 10 (left) and said peripheral devices 36 (right), so called embedded systems 18 are used to sense and control the so-called Input/Output devices 26 e.g., so-called I/O cards. These embedded systems are hosted on the so-called power/controller cards 18 and are dedicated computing units, for example a so-called Power PC which is used without the usual man/machine interface.
For the purpose of version consistency required for operating the peripheral devices 36 without major problems as well as for cost reasons neither said I/O cards 26 nor embedded controllers 18 do possess an own persistent software storage, like a hard disk, in which multiple versions of a software could be stored and executed.

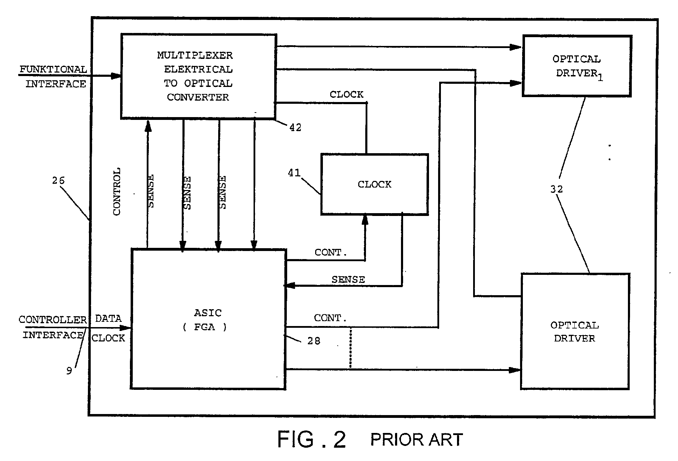

Instead, and with additional reference to fig. 2, a more detailed, schematic representation of a prior art I/O card is given. There is provided a controller interface 9 connecting to an ASIC chip 28 in which the control logic is implemented for controlling the operation of the individual drive devices 42, 32 for driving the peripheral devices. In an example depicted in fig. 2, this is an electrical-to-optical and vice versa - Signal Converter 42 cooperating with a plurality of optical device drivers 32. Thus, said system comprises a controller means 22 and an input/output circuit (26) with an ASIC 28 and sensor/actor means 32 for driving said device 42.

Further, a clock 41 is provided for supplying said converter and the ASIC with a respective clock signal.

Via the functional interface 14 the operational signals are transferred which are required to use the peripheral devices.

Via said controller interface the ASIC 28, the so-called FGA, receives data signals and a clock signal. This implementation allows to even communicate with the FGA (ASIC) 28 when the clock on the card is defective or powerless due to a short somewhere on the card. In this case the sense and control lines of the FGA can still be used to identify the root cause of the problem.
In order to focus now the disadvantages of prior art the system availability in computer system environments like those described above is addressed now in more detail:

Although, a variety of efforts is made to absolutely minimize the duration where a computer system environment or a subsystem is not able to perform its task due to a software or a hardware failure, e.g., redundant controllers, redundant peripheral devices, driver code runs in only one, unique version, etc., the system availability is not sufficiently provided yet in prior art.

From other computer system environments, e.g., that have real-time requirements, and therefore the system availability being extremely important, various techniques like keeping persistent states, trace points, etc., are known to improve said system availability.

This, however, is not applicable to the embedded systems caused by the specific hardware configuration of said embedded systems, and the intended absence of e.g., a hard disk and a respective tracing logic in the I/O card itself.

It would be desirable to apply such techniques like keeping persistent states, trace points, etc. to other computer system environments or subsystems as well, for example to profit from them in the above mentioned embedded systems in order to increase their system availability.

### 1.3 OBJECTS OF THE INVENTION

It is thus an object of the present invention to improve the system availability in an environment comprising embedded systems.

### 2. SUMMARY AND ADVANTAGES OF THE INVENTION

Said object of the invention is achieved by the features stated in enclosed independent claims to which reference should now be made. Further advantageous arrangements and embodiments of the invention are set forth in the respective subclaims.

According to the present invention basic concepts a method and system for operating an input/output circuit for driving peripheral devices controlled by an embedded system is disclosed. For increasing the overall system availability the invention proposes to add some limited repeatedly performed status storing functionality preferably into a register storage of the I/O devices. This can be easily exploited, i.e., read out from external of the input/output devices via the controller of the embedded system.

Said additional logic "add-on" which is for example implemented in an ASIC in the embedded system repeatedly generates status information reflecting the status of an associated input/output device, continuously stores said status information in an input/output storing means, for example, in a register included in said ASIC, and keeping said status information available to be requested by a controller communicating with the ASIC logic in the input/output circuit.

Said regularly storing of status information then enables said controller, for example in case of a controller reboot, or when a redundantly provided controller takes over the job of a first controller which had a breakdown before, to initiate a helpful response to be issued by a sensor/actor means, for example a response from an Optical-to-Electrical signal converter in a case when an optical peripheral device is to be operated, or at least a fibre-optic signal transmission is performed by said converter.

The helpfulness for the purposes of improved system availability is that said response reflects the current drive status of said exemplary converter device.
Thus when the controller software reads the (current) status information from said input/output storage means of said input/output circuit, it is enabled to comparing said response with the stored status information. Thus the controller is enabled to continue the operation of said sensor/actor means dependent of the compare result.
When for example, the freshly sensed status is the same as that one read out from the register, then the rebooted controller or the stand-by redundant controller can continue operation without restarting / rebooting / reinitializing the sensor/actor circuit which in the worst case would terminate a running communication between server and peripheral devises.

By that time is saved and the system availability is increased.

Said solution profits from the fact that it is possible for the operating system and thus for the controller to read and write the I/O address space. Thus an I/O register or the like can be used as a normal RAM for storing said important status information.

Advantageously, a register is used for storing the status information, because a power drop then has the same effect on the register content as on the current sense information at the sensor/actor device, i.e., there is no defined status which can be relied on, and thus the logic conclusion that a restart of the device is required is easy and error-free to take.

Advantageously, a cold-start indicator flag is additionally provided which is comprised of said status information. This flag can be evaluated by the controller in the above situation prior to any other information. When the flag is 'on', then the controller must initialize the dependent device. In this single case a reboot of the device is required.

The present invention is thus advantageously applicable when an increased system availability - nearly permanent - of the components is required. This is in particular the case in the above mentioned type of systems when the controllers are configured redundantly.

### 3. BRIEF DESCRIPTION OF THE DRAWINGS

The present invention is illustrated by way of example and is not limited by the shape of the figures of the accompanying drawings in which:
- Fig. 1: is a schematic block diagram showing the most essential elements used in the environment of a clustered server area communicating with a prior art an I/O circuit system, survived by an embedded control system, for operating peripheral devices,
- Fig. 2: is a schematic block diagram showing the most essential elements of a prior art I/O circuit used in fig. 1 showing some more details,
- Fig. 3: is a schematic block diagram according to fig. 2 but disclosing the inventional use of a storage according to a preferred aspect of the inventional method, and
- Fig. 4: is a schematical block diagram showing the basic steps and the control flow of an embodiment of the inventional method.

### 4. DESCRIPTION OF THE PREFERRED EMBODIMENT

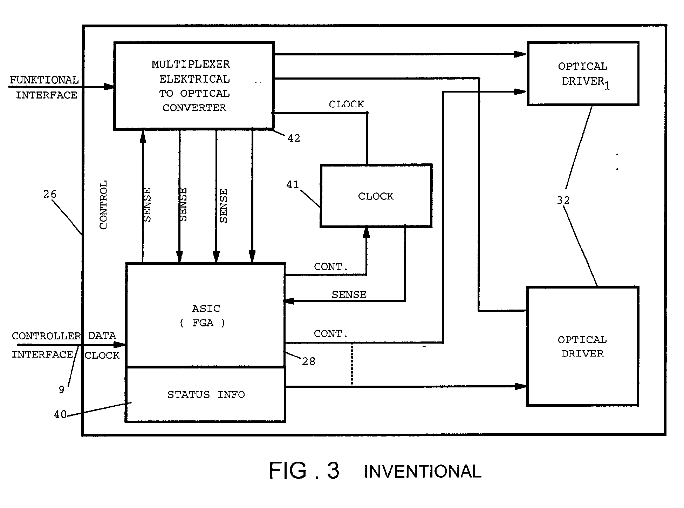

With general reference to the figures and with special reference now to **fig. 3** an inventional input/output device 26 is described in more detail. Said input/output device 26 comprises a plurality of optical driver devices 32, a clock device 41, an electrical-to-optical multiplexing device 42 which represents the above mentioned sensor/actor means, a hardware chip device 28 that controls said input/output device 26 and an inventional input/output storage means 40 for storing the above mentioned status information. Said storage means is an input/output register accessible by the operating system of the server, see back to fig. 1.

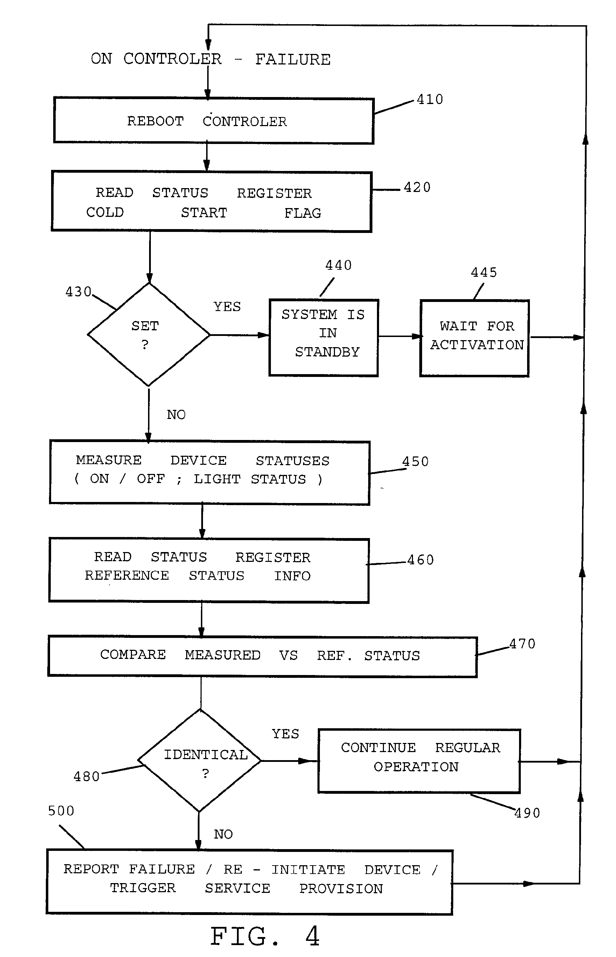

In the register storage 40 the ASIC 28 logic repeatedly stores status information of the converter 42 according the underlying inventional embodiment. Thus, this information can be used later on when it is requested by a controller via the controller interface which is discussed next below with reference to fig. 4.

Fig. 4 is a schematical block diagram showing the basic steps and the control flow of an embodiment of the inventional method.

On a failure of the controller means 18 said controller is rebooted, step 410. After the controller 18 has resumed operation it reads a cold start flag from the register 40 located with the ASIC 28 inside the input/output device circuit 26, step 420.

If said cold start flag is set to YES, see the YES branch of decision 430, the system is recognized to be in stand-by status, step 440, and waits for activation, i.e., a restart initiated by the controller, step 445.

If said cold start flag is set to NO, see the NO-branch of decision 430, the status information reflecting the current status of said input/output device 26 is sensed, step 450, into the controller 18.

Then the status information which was already (repeatedly) stored in said input/output register storage 40 located on the input/output device 26 is read, step 460 and compared step 470, to the status information freshly sensed by the controller means 18. This leads to a decision identical or not, step 480.

If identical results are present, see the YES-Branch of decision 480, the regular operation of the system is continued, step 490, meaning that the system continues its operation at the point where the disruption occurred.

Otherwise, NO-branch, the result of said comparison (480) does not yield identical results then a failure is reported and the input/output device (26) is re-initialized, step 500, and / or a service can be triggered to be provided for repairing the breakdown system elements.

Thus, as reveals from the foregoing description the present invention represents a large step forward to increase the overall system availability in those systems having the specific properties as it was sketched out in the introduction.

In the foregoing specification the invention has been described with reference to a specific exemplary embodiment thereof. It will, however, be evident that various modifications and changes may be made thereto without departing from the broader spirit and scope of the invention as set forth in the appended claims. The specification and drawings are accordingly to be regarded as illustrative rather than in a restrictive sense.

The present invention can be realized in hardware, software, or a combination of hardware and software. A tool according to the present invention can be realized in a centralized fashion in one computer system, or in a distributed fashion where different elements are spread across several interconnected computer systems. Any kind of computer system or other apparatus adapted for carrying out the methods described herein is suited. A typical combination of hardware and software could be a general purpose computer system with a computer program that, when being loaded and executed, controls the computer system such that it carries out the client or server specific steps of the methods described herein.

The present invention can also be embedded in a computer program product, which comprises all the features enabling the implementation the respective steps of the methods described herein, and which - when loaded in one or more computer systems - is able to carry out these methods.

Computer program means or computer program in the present context mean any expression, in any language, code or notation, of a set of instructions intended to cause a system having an information processing capability to perform a particular function either directly or after either or both of the following
a)conversion to another language, code or notation;
b)reproduction in a different material form.

## Claims

1. A method for operating an input/output circuit (26) in cooperation with a dedicated controller means (18) for driving a plurality of peripheral devices (36) via sensor/actor means (32),the method comprising the steps of:in case of a controller (18) reboot (410):initiating (450) a sensor/actor means (32) response reflecting its current drive status,reading (460) the status information from said input/output storage means (40) of said input/output circuit (26),comparing (470) said sensor/actor means (32) response with the stored status information,continuing (490,500) the operation of said sensor/actor means (32) dependent of the compare result.

2. The method according to claim 1, applied within an embedded system.

3. The method according to claim 1, where in case of a failure of a first controller device (18), a second, redundantly provided controller means, takes over the tasks of said first controller means (18) by reading said status information from said input/output storage means (40) according to claim 1.

4. A method for operating an input/output circuit (26) in cooperation with a dedicated controller means (18) for driving a plurality of peripheral devices (36) via sensor/actor means (32),the method comprising the steps of:repeatedly storing status information, said status information reflecting the status of said input/output device (26) itself,keeping said status information available to be requested by another device.

5. A hardware chip, having means for performing the steps of the method according to the preceding claim.

6. The hardware chip according to the preceding claim in which the means for performing the steps of the method according to claim 4 is an ASIC and/or the storing means is a register means (40).

7. A printed circuit board comprising the hardware chip according to one of the preceding claims 5 and 6.

8. A computer program for execution in a data processing system comprising computer program code portions for performing respective steps of the method of claim 1 to claim 3 when said computer program code portions are executed on a computer.

9. A computer program product stored on a computer usable medium comprising computer readable program means for causing a computer to perform the method of claim 1 to claim 3 when said computer program code portions are executed on a computer.
